# EUROPÄISCHE PATENTANMELDUNG

(11) **EP 0 741 138 A2**
(43) Veröffentlichungstag der Anmeldung: **06.11.1996**
(21) Anmeldenummer: 96105990.4
(22) Anmeldetag: 17.04.1996
(51) Int. Cl.: C07F 9/535, G01C 1/08, C07F 9/60

(54) **Verfahren zur Herstellung neuer stabilisierter Phosphor Ylide**

(30) Priorität: 02.05.1995 DE 19515982
(71) Anmelder: HOECHST AKTIENGESELLSCHAFT, 65929 Frankfurt am Main (DE)
(72) Erfinder: Pasenok, Sergej, Dr., 65835 Liederbach (DE); Appel, Wolfgang, Dr., 65779 Kelkheim (DE)

(57) **Zusammenfassung**

Verbindungen der allgemeinen Formel (1)

Pph₃-CH-C(R)=Nu (1)

worin die Symbole R und Nu folgende Bedeutung haben:
R = Wasserstoff, ein C₁-C₅-Alkyl- oder C₁-C₅-Fluor- oder Perfluoralkylrest, ein gegebenenfalls fluorierter C₆-C₁₄-Arylrest oder eine Gruppe OCH₃; Nu = S, Se, C(CN)₂, NH, PhN, PhNHN, CH₃COCCOCH₃, CH₃OOCCCOOCH₃ oder ein Rest der Formeln (a), (b), (c), (d) oder (e) 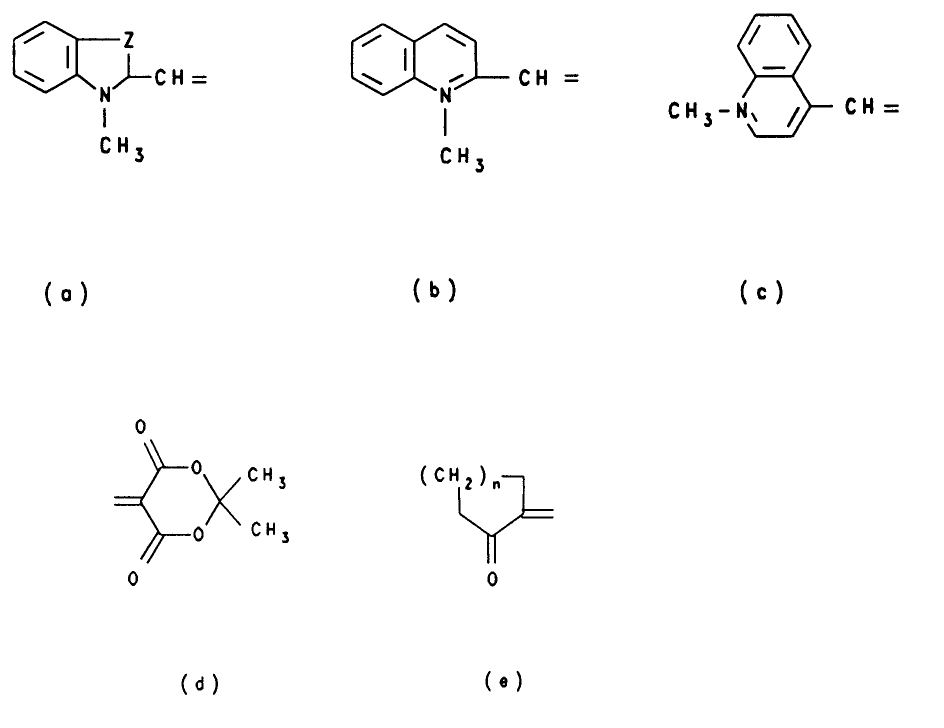 mit Z = C(CH₃ )₂, S oder N(CH₃) und n = 1 oder 2
wobei die Kombinationen R = Ph und Nu = NPh, CH₃COCCOOC₂H₅ sowie R = Ar, SAlk, OAlk und Nu = NPh und die Kombination R = H, Alk, Aryl und Nu = S ausgeschlossen sind.

## Beschreibung

Synthetisch wertvolle 2-Oxoalkylidentriphenylphosphorane (OATP) werden normalerweise auf zwei Wegen hergestellt. Entweder durch Reaktion von Triphenylphosphin mit a-Halogenketonen und anschließender Behandlung des resultierenden Phosphoniumsalzes mit Alkalihydroxid (M.I. Shevchuk et al., Zhurnal obshei Khimii, Vol. 40, N 1, pp. 48-57, 1970) 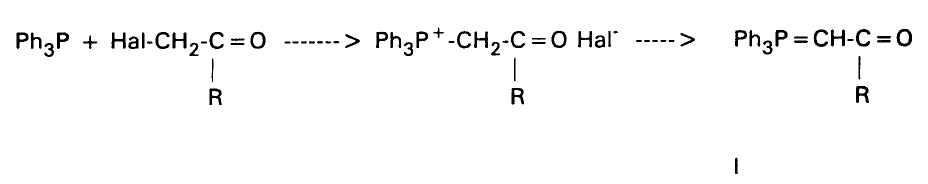 (R = Alkyl, Aryl, Alkoxy)
oder durch Acylierung von Methylentriphenylphosphoran mit Acylchloriden (H.J. Bestmann et al., Chem. Ber. 95, 1513, 1962) oder reaktiven Carboxylderivaten (Y. Sheng et al., Synthesis, 1984, p. 924-926).

Ph₃P = CH₂ + RCOX → Ph₃P = CH-COR

(R = Alkyl, Perfluoralkyl, Aryl; X = Halogen, OR)

Einige Phosphorylide mit anderen stabilisierenden Gruppen wurden durch Reaktion von Phenylethinyl-triphenylphosphoniumbromid (II) mit Anilinen, Enaminen oder Acetessigester (H.Hoffmann et al., Tetrahedron Letters N17, 1964, S. 983-987) 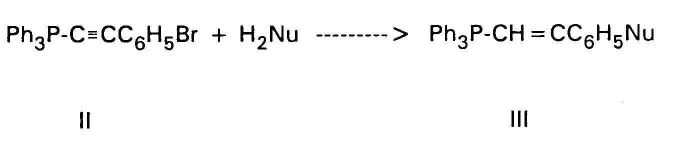 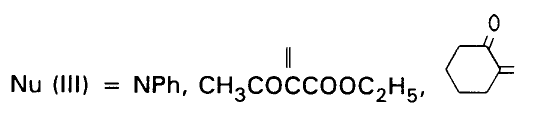 oder durch Acylierung von Methylentriphenylphosphoran mit Imidoylchlorid (H.Yoshida et al., Synthesis 1977, S.626-628) dargestellt. 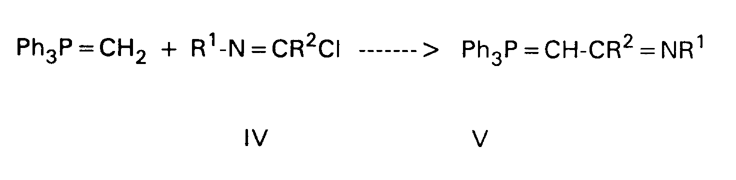 R¹ (V) = Ar; R² (V) = Ar, SAlk, OAlk

Einige 2-Thioxoalkylidentriphenylphosphorane (VII) sind durch Alkylierung von Triphenylphosphin mit Thioderivaten (VI) (EP-A-052 931) hergestellt worden; 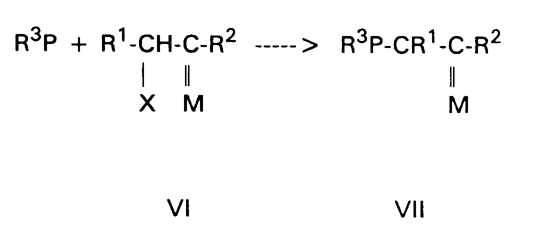 M (VII) = S; R¹, R² = H, Alk, Aryl

Bis auf die vorstehend genannten Verfahren, war es nach dem Stand der Technik bis jetzt nicht möglich Phosphorbetaine mit einer anderen stabilisierenden Gruppe als dem Carbonylsauerstoff in β-Position zu erhalten. Phenylethinyl-triphenylphosphoniumbromid (II), Imidoylchloride (IV) und die alkylierten (Thio)carbonylverbindungen sind meist sehr schwer zugänglich, so daß die Herstellung von Phosphorbetainen mit den oben genannten Gruppen nur auf wenige Beispiele beschränkt bleiben dürfte.

Andererseits wäre aber eine Substitution des Sauerstoffs durch andere Gruppen mit unterschiedlichen sterischen und elektronischen Eigenschaften ein günstiger Weg zur Modifikation organischer Verbindungen.

Es besteht somit die Aufgabe ein einfaches und wirtschaftliches Verfahren zur Verfügung zu stellen, das es ermöglicht den Carbonylsauerstoff von 2-Formyl- oder 2-Oxoalkylidentriphenylphosphoranen (OATP) durch andere stabilisierende Gruppen zu ersetzen und auf diese Weise das Reaktionsverhalten oder z.B. die Komplexierungstendenz des ganzen Moleküls zu variieren.

Die vorliegende Erfindung löst diese Aufgabe und betrifft neue Verbindungen der allgemeinen Formel (1) und ein Verfahren zu ihrer Herstellung

PPh₃=CH-CR=Nu (1)

worin die Symbole R und Nu folgende Bedeutung haben: R = Wasserstoff, ein C₁-C₅-Alkyl- oder C₁-C₅-Fluor- oder Perfluoralkylrest, ein gegebenenfalls fluorierter C₆-C₁₄-Arylrest oder eine Gruppe OCH₃;
Nu = S, Se, C(CN)₂, NH, PhN, PhNH-N =, 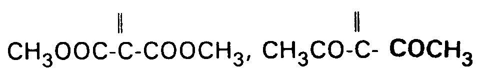 oder ein Rest der Formeln (a), (b), (c), (d) oder (e) 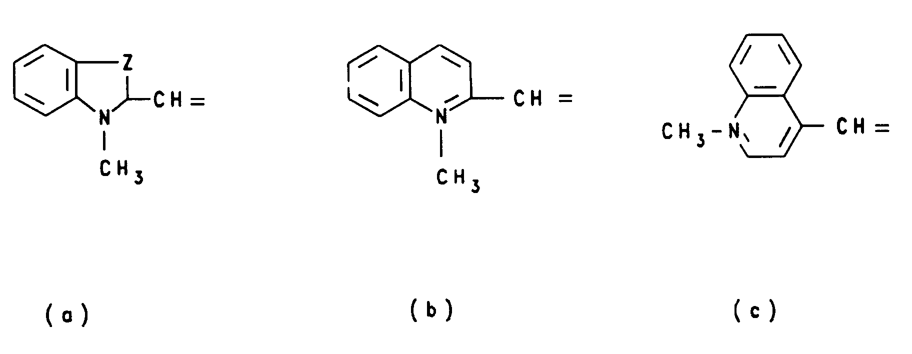 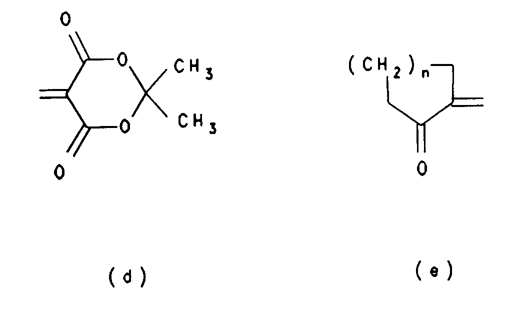 mit Z = C(CH₃ )₂, S oder N(CH₃) und n = 1 oder 2
wobei die Kombinationen R = Ph und Nu = NPh, 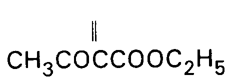 sowie R = Ar, SAlk, OAlk und Nu = NPh und die Kombination R = H, Alk, Aryl und Nu = S ausgeschlossen sind.

Verbindungen der Formel (1) sind erhältlich durch Umsetzung von 2-Formyl- oder 2-Oxoalkylidentriphenylphosphoranen mit Chlorierungsmitteln zu Verbindungen der Formel (2)

Ph₃P⁺-CH=C(R)-Cl X⁻ (2)

mit X = Cl, Br oder POCl₂
und Reaktion von Verbindungen der Formel (2) mit Nucleophilen (Nu).

Als Chlorierungsmittel werden vorzugsweise POCl₃, PCl₃, COCl₂, (COCl)₂, SOCl₂ oder andere gebräuchliche Chlorierungsmittel eingesetzt. Die Temperatur liegt bei der Chlorierungsreaktion in einem Bereich von 60 bis 150°C, bevorzugt in einem Bereich von 90 bis 120°C, bei einer Reaktionsdauer im Bereich von 30 bis 90 Minuten, insbesondere von 40 bis 60 Minuten.

Überraschenderweise wurde nun gefunden, daß bei der Umsetzung von 2-Formyltriphenylphosphoranen oder 2-Oxoalkylidentriphenylphosphoranen mit einem Chlorierungsmittel stabile 2-Chloralkenylphosphoniumsalze der Formel (2) entstehen. Nach dem bekannten Stand der Technik wäre hier zu erwarten gewesen, daß diese Verbindungen unter Wasserstoffaustausch zu den entsprechenden a-Chloryliden (D.B. Denny et al. J. Org. Chem. 27, 998, 1962) oder Sauerstoffaustausch zu den Dichloralky-triphenylphosphoniumsalzen reagieren.

Das stöchiometrische Verhältnis von 2-Oxoalkylidentriphenylphosphoranen zu dem eingesetzten Chlorierungsmittel beträgt erfindungsgemäß im allgemeinen 1 : 1,5 bis 1 : 2.

Die Umsetzung erfolgt in einem organischen, vorzugsweise chlorierten Lösemittel, wie z.B. Tetrachlorkohlenstoff, Chloroform oder Methylenchlorid, kann aber auch lösemittelfrei durchgeführt werden. Die Ausbeuten an 2-Chloralkenylphosphoniumsalzen betragen 80 bis 100 %, insbesondere > 90%.

Die auf diese Weise erhaltenen Phosphoniumsalze können mit verschiedenen Nucleophilen, wie z.B. Na₂S, Na₂Se, H₂C(CN)₂, 1,3,3-Trimethyl-2-methylen-1,3-indol (Fischer-Base), CH₃COOCH₂COOCH₃, CH₃COCH₂COCH₃ oder mit PhNH₂, PhNHNH₂ und NH₃ sowie Verbindungen der folgenden Formeln 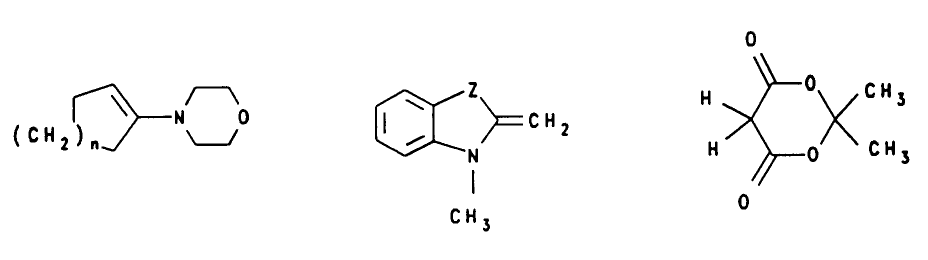 mit Z = O, S, N(CH₃)₂, C(CH₃)₂, CH =CH
zu neuen stabilisierten Wittig Yliden der Formel (1) umgesetzt werden.

Die Ausbeuten an Verbindungen der Formel (1) liegen bei dieser Reaktion im Bereich von 50 bis 90 %, vorzugsweise im Bereich von 70 bis 90%.

Die Umsetzung von Verbindungen der Formel (2) mit Nucleophilen wird in organischen Lösemitteln, wie z.B. Methanol, Ethanol, Methylenchlorid oder Acetonitril durchgeführt. Hierzu wird das entsprechende Nucleophil in einem stöchiometrischen oder überstöchiometrischen Anteil bezogen auf das eingesetzte Triphenyl-β-chloroalkenyl-phosphoniumsalz verwendet. Insbesondere liegt das Verhältnis Nucleophil zu Verbindungen der Formel (2) im Bereich von
1 : 1 bis 1 : 2.

Die Reaktionsdauer liegt im Bereich von 30 bis 80 Minuten, bei einer Temperatur im Bereich von 20 bis 80°C, insbesondere 20 bis 40°C.

Die erfindungsgemäßen Verbindungen der Formel (1) besitzen im Vergleich mit den entsprechenden einen Carbonylsauerstoff enthaltenden Verbindungen eine Palette interessanter Eigenschaften. Durch Substitution des Carbonylsauerstoffs durch Schwefel, Selen oder heterocyclische Fragmente ist es beispielsweise möglich Verbindungen mit einer erhöhten Komplexbildungstendenz zu erhalten oder Verbindungen die im sichtbaren Bereich des Spektrums absorbieren und daher z.B. als Sensibilisierer für Silberhalogenide in der Photographie, als Vorstufen bei der Herstellung von β-substituierten Cyanin-Farbstoffen und zur Synthese von konjugierten Systemen sowie als Synthone für die Herstellung verschiedener Heterocyclen verwendet werden können.

### Beispiel 1

### Herstellung von Triphenyl-(2-chloralkenyl)phosphonium-Salzen

In einem Dreihalskolben mit Thermometer, Kühler und Blasenzähler werden 20 mmol des entsprechenden Triphenyl-β-oxophosphorans und 40 mmol POCl₃ 60 bis 90 Minuten bei 100°C erhitzt. Der Überschuß an POCl₃ wird im Vakuum abdestilliert, der Rückstand dreimal mit Diethylether gewaschen und im Vakuum getrocknet.
a. Triphenyl-(2-chlor-prop-1-enyl)phosphonium-dichlorphosphat:
   Ausbeute: 92 %
   Schmelzpunkt: 105-107°C
b. Triphenyl-(2-chlor-3,3-difluor-prop-1-enyl)phosphonium-dichlor-phosphat:
   Ausbeute: 94 %
   Schmelzpunkt : 150-152°C
c. Triphenyl-(2-chlor-3,3,3-trifluor-prop-1-enyl)phosphonium dichloroxyphosphat:
   Ausbeute: 91 %
   Schmelzpunkt: 110-112°C

### Beispiel 2

### Herstellung von Triphenylphosphoranylidenalkan-2-thionen

50 mmol des entsprechenden Triphenyl-β-chloralkenyl-phosphonium-Salzes werden zusammen mit 100 mmol Na₂S in 50 ml Methanol eine Stunde bei 20°C gerührt. Das Reaktionsgemisch wird mit 100 ml Wasser verdünnt und die organische Phase zweimal mit Dichlormethan extrahiert. Man trocknet über Natriumsulfat, filtriert und destilliert das organische Lösungsmittel im Vakuum ab. Der Rückstand wird aus einem CH₂Cl₂ : Hexan-Gemisch umkristalisiert.
a. 3-(Triphenylphosphoranyliden)-propan-2-thion
   Ausbeute: 89 %
   Schmelzpunkt: 180-182°C
b. 1,1-Difluor-3-(triphenylphosphoranyliden)-propan-2-thion
   Ausbeute: 71 %
   Schmelzpunkt: 146-148°C
c. 1,1,1-Trifluor-3-(triphenylphosphoranyliden)-propan-2-thion
   Ausbeute: 74 %
   Schmelzpunkt: 162-164°C
d. 1-Phenyl-2-(triphenylphosphoranyliden)-ethanthion
   Ausbeute: 84 %
   Schmelzpunkt: 164-166°C

### Beispiel 3

Herstellung von 1,1-Difluor-3-(triphenylphosphoranyliden)-propan-2-selenon 50 mmol Triphenyl-(2-chlor-3,3-difluorprop-1-enyl) phosphonium oxochlorid werden mit 100 mmol Na₂Se in 50 ml Methanol eine Stunde bei 20°C gerrührt. Das Reaktionsgemisch wird mit 100 ml Wasser verdünnt, die organische Phase zweimal mit Dichlormethan extrahiert und über Natriumsulfat getrocknet. Das Lösemittel wird abfiltriert und anschließend im Vakuum abdestilliert. Der Rückstand wird aus einem CH₂Cl₂ : Hexan-Gemisch umkristallisiert.
Ausbeute: 52 %
Schmelzpunkt: 149-151°C

### Beispiel 4

### Herstellung von Triphenylphosphoranyliden-alkyl-ethyliden-malononitril

50 mmol des entsprechenden Triphenyl-β-chloralkenylphosphonium-Salzes werden zusammen mit 50 mmol Malonsäuredinitril in 40 ml Ethanol und 100 mmol Triethylamin eine Stunde bei 20°C gerührt. Der Niederschlag wird abfiltriert und das Produkt aus Ethanol umkristallisiert.
a. 1-(Triphenylphosphoranyliden)-methyl-ethyliden-malononitril
   Ausbeute: 88 %
   Schmelzpunkt: 266-268°C
b. 2,2-Difluor-1-(triphenylphosphoranyliden)methyl-ethyliden-malononitril
   Ausbeute: 72 %
   Schmelzpunkt: 211 °C
c. 2,2,2-Trifluor-1-(triphenylphosphoranyliden)methyl-ethyliden-malononotril
   Ausbeute: 90 %
   Schmelzpunkt: 234-236°C
d. 1-(Triphenylphosphoranyliden)phenyl-ethyliden-malononitril
   Ausbeute: 61 %
   Schmelzpunkt: 238-240°C

## Patentansprüche

1. Verbindungen der allgemeinen Formel (1)
PPh₃-CH-C(R)=Nu (1)
worin die Symbole R und Nu folgende Bedeutung haben:
R = Wasserstoff, ein C₁-C₅-Alkyl- oder C₁-C₅-Fluor- oder Perfluoralkylrest, ein gegebenenfalls fluorierter C₆ -C₁₄-Arylrest oder eine Gruppe OCH₃; Nu = S, Se, C(CN)₂, NH, PhN, PhNHN, CH₃COCCOCH₃, CH₃OOCCCOOCH₃ oder ein Rest der Formeln (a), (b), (c), (d) oder (e) 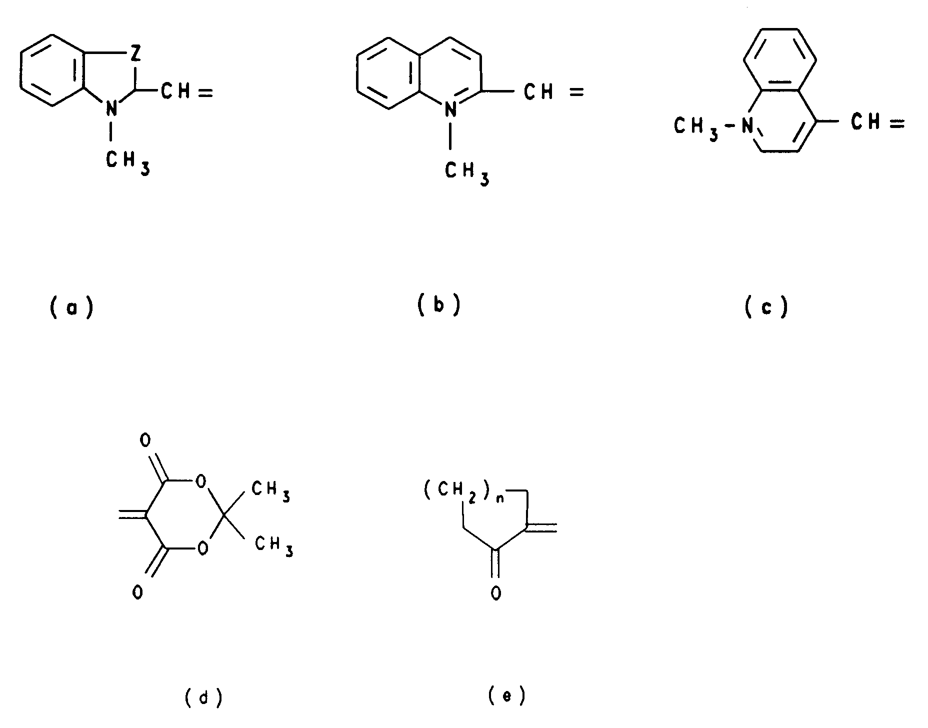 mit Z = C(CH₃ )₂, S oder N(CH₃) und n = 1 oder 2
wobei die Kombinationen R = Ph und Nu = NPh, CH₃COCCOOC₂H₅ sowie R = Ar, SAlk, OAlk und Nu = NPh und die Kombination R = H, Alk, Aryl und Nu = S ausgeschlossen sind.

2. Verfahren zur Herstellung von Verbindungen der Formel (1), dadurch gekennzeichnet, daß 2-Formyl- oder 2-Oxoalkylidentriphenylphosphorane mit Chlorierungsmitteln zu Verbindungen der Formel (2)
Ph₃P-CH=C(R)-Cl X⁻ (2)
mit X = Cl, Br oder POCl₂
umgesetzt werden und Reaktion von Verbindungen der Formel (2) mit Nucleophilen (Nu) zu Verbindungen der Formel (1)
PPh₃-CH-C(R)=Nu (1)
worin R für Wasserstoff, einen C₁-C₅-Alkyl- oder C₁-C₅-Fluor- oder Perfluoralkylrest, einen gegebenenfalls fluorierten C₆-C₁₄-Arylrest oder eine Gruppe OCH₃ steht und Nu S, Se, C(CN)₂, PhN, NH, PhNHN, CH₃COCCOCH₃, CH₃OOCCCOOCH₃ oder einen Rest der Formeln (a), (b), (c), (d) oder (e) bedeutet 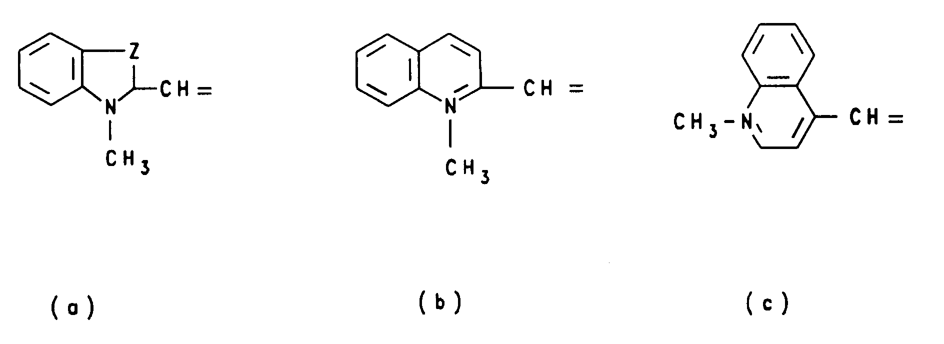 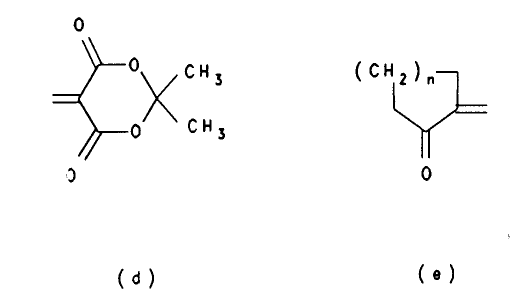 mit Z= C(CH₃ )₂, S oder N(CH₃).

3. Verfahren nach Anspruch 2, dadurch gekennzeichnet, daß als Chlorierungsmittel POCl₃ , PCl₃, COCl₂, (COCl)₂ oder SOCl₂ verwendet wird.

4. Verfahren nach Anspruch 2, dadurch gekennzeichnet, daß als Nucleophile Verbindungen aus der Gruppe Na₂S, Na₂Se, H₂C(CN)₂, 1,3,3-Trimethyl-2-methylen-1,3-indol (Fischer-Base), CH₃COCH₂COCH₃, CH₃COOCH₂COOCH₃, PhNH₂, PhNHNH₂, NH₃ sowie Verbindungen der folgenden Formeln 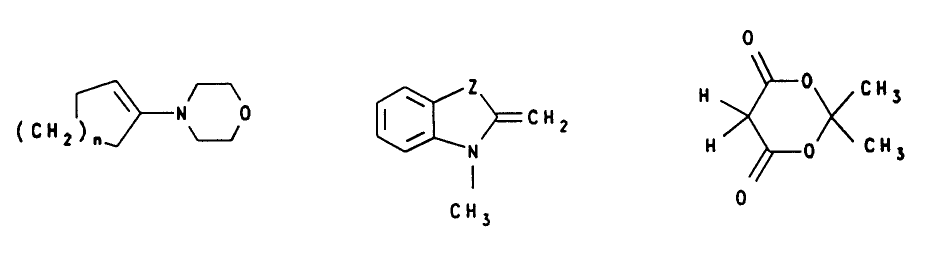 mit Z = O, S, N(CH₃)₂, C(CH₃)₂, CH = CH eingesetzt werden.

5. Verbindungen nach Anspruch 1, dadurch gekennzeichnet, daß sie eine hervorragende Komplexbildungstendenz aufweisen.

6. Verwendung von Verbindungen der Formel (1), gemäß Anspruch 1, als Sensibilisierer für Silberhalogenide in der Photographie.

7. Verwendung von Verbindungen der Formel (1), gemäß Anspruch 1, als Vorstufen bei der Herstellung von β-substituierten Cyanin-Farbstoffen und zur Synthese von konjugierten Systemen.

8. Verwendung von Verbindungen der Formel (1) gemäß Anspruch 1 als Synthone.
